# EUROPEAN PATENT SPECIFICATION

(11) **EP 4 187 748 B1**
(45) Date of publication and mention of the grant of the patent: **07.10.2026**
(21) Application number: 20949877.3
(22) Date of filing: 21.08.2020
(51) Int. Cl.: H02J 7/56, H02M 3/07, H02M 1/00, H02M 3/158

(54) **CIRCUIT FOR CONTROLLING CELL, AND ELECTRONIC DEVICE**
SCHALTUNG ZUR STEUERUNG EINER ZELLE UND ELEKTRONISCHE VORRICHTUNG
CIRCUIT DE COMMANDE DE CELLULE, ET DISPOSITIF ÉLECTRONIQUE

(43) Date of publication of application: 31.05.2023
(73) Proprietor: Huawei Technologies Co., Ltd., Longgang Shenzhen, Guangdong 518129 (CN)
(72) Inventor: JIA, Ligang, Shenzhen, Guangdong 518129 (CN); HUANG, Dongqi, Shenzhen, Guangdong 518129 (CN)
(74) Representative: Goddar, Heinz J.
(86) International application number: PCT/CN2020/110430
(87) International publication number: WO 2022/036667

(56) References cited:
- EP-A1- 3 561 990
- CN-A- 102 684 271
- CN-A- 105 934 865
- CN-A- 107 834 844
- CN-A- 110 741 528
- CN-A- 110 741 528
- US-A1- 2008 197 811
- US-A1- 2017 179 757

## Description

### TECHNICAL FIELD

This application relates to the field of electronic technologies, and in particular, to a battery cell control circuit and an electronic device.

### BACKGROUND

In the field of battery charging and discharging control circuits, one of research directions in the industry is to require a larger battery capacity and a larger charging rate. Currently, a commonly used charging and discharging solution of a single lithium battery has encountered a bottleneck in charging rate increase. One of key factors that affect charging rate increase is a maximum through-current capability of a universal serial bus (USB). A standard used by the USB includes a universal serial bus type-C interface. Although a dedicated charging cable and interface can be customized in theory to break through a limitation of a maximum through-current capability of the type-C standard, device costs are greatly increased, and a problem of compatibility with an existing USB interface standard is caused.

Therefore, a battery solution is provided in the industry. When the USB interface is used as a basis, dual battery cells are connected in series, to double a voltage of a USB cable and to double a charging rate of a single battery cell in theory. In this method, device costs are hardly adversely affected, and when internal space of a device is allowable, a capacity can be doubled without customizing a single battery with an ultra-large capacity.

However, a charging and discharging control circuit of the dual battery cells is more complex. For example, there is a problem of compatibility between the charging and discharging control circuit and different adapters. How to provide a dual-battery cell control circuit that can be compatible with a customized adapter and a non-customized adapter is one of research directions in the industry.
EP 3 561 990 A1 discloses an equalization circuit, a device to be charged and a charging control method. The equalization circuit includes: a first converting unit, configured to receive a direct voltage output by a first battery cell and to convert the direct voltage output by the first battery cell into a first alternating voltage; a first resonant unit, configured to receive the first alternating voltage and to convert the first alternating voltage into a second alternating voltage in a resonant manner, in which a magnitude of the second alternating voltage is greater than that of the first alternating voltage; a first capacitive coupling unit and a second converting unit, in which the first capacitive coupling unit is configured to couple the second alternating voltage to the second converting unit in a capacitive coupling manner, and the second converting unit is configured to convert the second alternating voltage into a first charging voltage for charging a second battery cell.
US 2008/197811 A1 discloses circuits and methods for battery charging. In one embodiment, the battery charging circuit comprises an AC to DC converter, a charging control switch, and a charger controller. The AC to DC converter provides a charging power to a battery pack. The charging control switch is coupled between the AC to DC converter and the battery pack. The charging control switch transfers the charging power to the battery pack. The charger controller detects a battery status of the battery pack and controls the charging control switch to charge the battery pack in a continuous charging mode or a pulse charging mode according to the battery status. The charger controller also controls the AC to DC converter to regulate the charging power according to the battery status.
CN 110 741 528 A discloses a battery-powered circuit including a first battery cell, a second battery cell, a switch, a first switching unit, and a second switching unit; the first end of the second battery is connected to the first end of the second switching unit, the second end of the second battery is connected to the first end of the switch, and the second end of the second switching unit is connected to the second end of the switch; the first end of the first battery cell is connected to the second end of the switch, and the second end of the second battery cell Terminal is connected to the first end of the first switching unit, the second end of the first switching unit is connected to the first end of the switch; when the switch is turned on and the first switching unit and the second switching unit are in an off state, the first battery cell is connected in series with the second battery cell; when the switch is turned off and the first switching unit and the second switching unit in a conductive state, the first battery cell and the second battery cell are connected in parallel. The battery-powered circuit can provide a battery-powered circuit that can adapt to multiple charging schemes in the same equipment to be charged. It also relates to the equipment to be charged and a charging control method.

### SUMMARY

This application provides a battery cell control circuit and an electronic device, to improve management efficiency of the battery cell control circuit.

A first aspect provides a battery cell control circuit of claim 1. The battery cell includes a first battery cell and a second battery cell that are connected in series, a cathode of the first battery cell is grounded, and the control circuit includes: a first charging path, including a first SC converter, a second transistor Q2, and a fifth transistor Q5, where the second transistor Q2 is disposed between a voltage input port and the first SC converter, a first terminal of the first SC converter is connected to the second transistor Q2, a second terminal of the first SC converter is connected to a first terminal of the fifth transistor Q5, a second terminal of the fifth transistor Q5 is configured to connect to an anode of the second battery cell, and the voltage input port is configured to receive an input voltage; and a second charging path, including a first switching conversion circuit, a second SC converter, a third transistor Q3, and the fifth transistor Q5, where the third transistor Q3 is disposed between the voltage input port and the first switching conversion circuit, a first terminal of the first switching conversion circuit is connected to the third transistor Q3, a second terminal of the first switching conversion circuit is connected to a first terminal of the second SC converter, a second terminal of the second SC converter is connected to the second terminal of the first SC converter, and the first switching conversion circuit supports working in a buck mode in a direction from the first terminal to the second terminal of the first switching conversion circuit.

The first charging path and the second charging path are disposed in the battery cell control circuit. The first SC converter is used in the first charging path to implement fixed-ratio voltage conversion, and a high-voltage direct charging mode may be implemented by using the first SC converter, to be suitable for a customized adapter. The second charging path includes the first switching conversion circuit and the second SC converter, to support working in the buck mode in the direction from the first terminal to the second terminal of the first switching conversion circuit and implement variable-ratio voltage conversion, to be suitable for a non-customized adapter. In this way, the circuit can be compatible with the customized adapter and the non-customized adapter, so that flexibility and management efficiency of battery cell charging and discharging control are improved.

Optionally, the voltage input port may be a USB port, and the USB port may support a plurality of standards such as a Type-C standard, a micro USB standard, and a mini USB standard.

Optionally, the high-voltage direct charging mode is a mode in which an input voltage received by the voltage input port is greater than a preset voltage (for example, 5.5 V) and the battery cell control circuit does not need to perform current stabilization processing on a charging current. The compatible charging mode is a charging mode in which the battery cell control circuit needs to perform current stabilization processing on a charging current. The compatible charging mode can be compatible with adapters whose output voltages are at different voltage levels. For example, the output voltage is 5 V, 9 V, 12 V, or 15 V.

Current stabilization may also be referred to as current regulation, and current stabilization means that a value of a current is controlled to remain unchanged at a constant value or fluctuate only within a quite small range.

With reference to the first aspect, when the first charging path works, the second transistor Q2 serves as a switch and is turned on, and the third transistor Q3 serves as a switch and is switched off; and when the second charging path works, the second transistor Q2 serves as a switch and is switched off, and the third transistor Q3 serves as a switch and is turned on.

The second transistor Q2 and the third transistor Q3 may serve as switches. For example, when the second transistor Q2 is turned on, it may indicate that the second transistor Q2 serves as a switch and is in an enabled state, and the circuit is connected. When the second transistor Q2 is switched off, it may indicate that the second transistor Q2 serves as a switch and is in a disabled state, and the circuit is disconnected.

Optionally, the voltage input port may be configured to receive a voltage input by the customized adapter or the non-customized adapter. When the customized adapter supplies power, the second transistor Q2 is turned on, the third transistor Q3 is switched off, and the fifth transistor Q5 is turned on, so that the customized adapter supplies power by using the first charging path, and the circuit works in the high-voltage direct charging mode. When the non-customized adapter supplies power, the second transistor Q2 is switched off, the third transistor Q3 is turned on, and the fifth transistor Q5 is turned on, so that the non-customized adapter supplies power by using the second charging path, and the circuit works in the compatible charging mode.

According to to the first aspect, the fifth transistor Q5 serves as a power switch and is in an enabled state when the first charging path works; and the fifth transistor Q5 is configured to stabilize a current when the second charging path works.

A charging current does not need to be stabilized when the customized adapter performs charging. Therefore, as designed, the fifth transistor Q5 servers as a power switch and is turned on when the first charging path works. A charging current needs to be stabilized when the non-customized adapter performs charging. Therefore, as designed, the fifth transistor Q5 is configured to stabilize a current when the second charging path works. Therefore, working statuses of the fifth transistor Q5 when different charging paths work are designed, so that the battery cell control circuit can be compatible with different charging modes, thereby improving flexibility and management efficiency of battery cell charging and discharging control.

Optionally, the working status of the fifth transistor Q5 may be controlled by a second control circuit. For example, when the second charging path works, the second control circuit may control a gate voltage of the fifth transistor Q5, so that a value of a current that passes through the fifth transistor Q5 is stabilized within a preset range. When the first charging path works, the second control circuit may control the fifth transistor Q5 to be in a fully enabled state and be equivalent to a power switch.

With reference to the first aspect, in a possible implementation, the second SC converter supports a boost mode in a direction from the first terminal to the second terminal of the second SC converter and the buck mode in a direction from the second terminal to the first terminal of the second SC converter.

The second SC converter is disposed between the first battery cell and the second battery cell, and the second SC converter may be configured to implement a voltage equalization function between the first battery cell and the second battery cell. In addition, when the first charging path works, the second SC converter may work in the buck mode, to buck a voltage and provide the voltage obtained after the bucking to a load; and when the second charging path works, the second SC converter works in the boost mode, to boost a voltage and provide the voltage obtained after the boosting to the second battery cell.

Therefore, the second SC converter may be multiplexed in the battery cell control circuit, so that design complexity and product costs are reduced.

With reference to the first aspect, in a possible implementation, the circuit further includes a fourth transistor Q4, a first terminal of the fourth transistor Q4 is connected to the second terminal of the first switching conversion circuit and the first terminal of the second SC converter, and a second terminal of the fourth transistor Q4 is connected to an anode of the first battery cell.

The fourth transistor Q4 is disposed between the first battery cell, the second SC converter, and the first switching conversion circuit. The fourth transistor Q4 is in an enabled state in the following cases: Voltage equalization between the first battery cell and the second battery cell is implemented and the first battery cell discharges to the load. Therefore, the fourth transistor Q4 may be multiplexed in the cases of voltage equalization and discharging to the load, so that design complexity and product costs of the battery cell control circuit are reduced.

With reference to the first aspect, in a possible implementation, when voltage equalization is performed between the first battery cell and the second battery cell by using the second SC converter, the fourth transistor Q4 serves as a power switch and is in an enabled state, and the fifth transistor Q5 serves as a power switch and is in an enabled state.

Optionally, a working status of the fourth transistor Q4 may be controlled by a first control circuit. For example, when voltages of the first battery cell and the second battery cell are unequal, the first control circuit is configured to control the fourth transistor Q4 to be turned on, so that the second SC converter performs voltage equalization.

When voltage equalization is performed between the first battery cell and the second battery cell, both the fourth transistor Q4 and the fifth transistor Q5 serve as power switches and are in an enabled state, to facilitate voltage equalization.

With reference to the first aspect, in a possible implementation, the first terminal of the fourth transistor Q4 is connected to a system power supply terminal, and when the first battery cell supplies power to the load by using the system power supply terminal, the fourth transistor Q4 is in an enabled state, and a voltage difference between the anode of the first battery cell and the system power supply terminal is made constant by adjusting a gate voltage of the fourth transistor Q4.

When the battery cell is in a charging mode, the system load is usually powered by an external power supply. However, if the external power supply cannot supply sufficient power, the battery cell needs to perform instantaneous recharging on the load. In this case, the first battery cell may supply power to the load by using the system power supply terminal. In this case, the fourth transistor Q4 is in an enabled state, and the voltage difference between the anode of the first battery cell and the system power supply terminal is made constant by adjusting the gate voltage, so that the fourth transistor Q4 can be multiplexed for the case of discharging to the load, thereby reducing design complexity and product costs of the battery cell control circuit.

With reference to the first aspect, in a possible implementation, when the first battery cell and the second battery cell reversely supply power by using the second SC converter and the first switching conversion circuit, the second SC converter works in the buck mode in the direction from the second terminal to the first terminal of the second SC converter, the first switching conversion circuit works in the boost mode in a direction from the second terminal to the first terminal of the first switching conversion circuit, and the fifth transistor Q5 serves as a power switch and is in an enabled state.

A working status is adjusted, so that the second SC converter, the first switching conversion circuit, and the fifth transistor Q5 can be multiplexed in the case of reverse power supply, thereby reducing design complexity and product costs of the battery cell control circuit.

With reference to the first aspect, in a possible implementation, the circuit further includes a first transistor Q1, a first terminal of the first transistor Q1 is connected to the voltage input port, and a second terminal of the first transistor Q1 is connected to a first terminal of the second transistor Q2 and a first terminal of the third transistor Q3.

Optionally, the first transistor Q1 may be disposed in a same chip as another component in the battery cell control circuit, or may be independently disposed.

Optionally, the first transistor Q1, the second transistor Q2, and the third transistor Q3 may jointly implement a switching function in the battery cell control circuit.

Optionally, turning on or off of a transistor (for example, the first transistor Q1, the second transistor Q2, or the third transistor Q3) that serves as a switch in the circuit may be controlled by a switch control circuit.

For example, when the first charging path works, the switch control circuit may switch off the transistor Q3, and turn on the transistors Q1 and Q2. When the second charging path works, the switch control circuit may switch off the transistor Q2, and turn on the transistors Q1 and Q3.

Optionally, the transistors Q1 to Q5 may be implemented by metal-oxide-semiconductor field-effect transistors (MOSFET).

A second aspect provides an electronic device. A first battery cell, a second battery cell, and the battery cell control circuit according to any one of the first aspect and the implementations of the first aspect are disposed in the electronic device.

### BRIEF DESCRIPTION OF DRAWINGS

FIG. 1 is a schematic diagram of an application scenario according to an embodiment of this application;
FIG. 2 is a schematic diagram of a structure of a battery cell control circuit according to an embodiment of this application;
FIG. 3 is a schematic circuit diagram of an SC converter according to an embodiment of this application;
FIG. 4 is a schematic circuit diagram of an SC converter according to an embodiment of this application;
FIG. 5 is a schematic circuit diagram of a buck voltage converter according to an embodiment of this application;
FIG. 6 is a schematic circuit diagram of a boost voltage converter according to an embodiment of this application;
FIG. 7 is a schematic circuit diagram of a buck-boost voltage converter according to an embodiment of this application;
FIG. 8 is a schematic diagram of a structure of a battery cell control circuit according to an embodiment of this application; and
FIG. 9 is a schematic diagram of a structure of a battery cell control circuit according to an embodiment of this application.

### DESCRIPTION OF EMBODIMENTS

The following describes technical solutions of this application with reference to the accompanying drawings.

Embodiments of this application provide a battery cell control circuit and an electronic device. The circuit may be disposed in the electronic device.

To facilitate understanding of the solutions of this application, some related terms are first described.

A buck voltage converter is a direct current to direct current (DC-DC) conversion circuit including an inductor, and can implement bucking output.

A boost voltage converter is a DC-DC conversion circuit including an inductor, and can implement boosting output.

A buck-boost voltage converter is a voltage converter with functions of both the buck voltage converter and the boost voltage converter. For example, the buck-boost voltage converter may implement boosting output or bucking output in a direction from a first terminal to a second terminal.

A bidirectional buck-boost voltage converter is a voltage converter that can implement the functions of the buck voltage converter and the boost voltage converter in both forward and reverse directions. For example, control logic is adjusted, so that the bidirectional buck-boost voltage converter can implement bucking-boosting output in the direction from a first terminal to a second terminal and bucking-boosting output in a direction from the second terminal to the first terminal by using a same circuit.

It should be noted that all buck/boost voltage converters in embodiments of this application are positive buck/boost converters. The positive buck/boost converter means that an input voltage and an output voltage of the buck/boost converter have a same polarity. The buck/boost converter may be a buck voltage converter, a boost voltage converter, or a buck-boost voltage converter.

A switched capacitor (SC) converter is a DC-DC conversion circuit, and a power-stage circuit part of the switched capacitor converter does not include an inductor. Bucking output or boosting output may be implemented by adjusting the control logic. The SC converter can implement only multiple conversion between an input voltage and an output voltage. Therefore, application scenarios are limited.

For a constant current (CC)/constant voltage (CV) charging mode, the CC charging mode is a constant current charging mode, to be specific, a charging current of a battery in a charging process keeps constant, and the CV charging mode is a constant voltage charging mode, to be specific, a voltage difference between a positive terminal and a negative terminal of a battery keeps constant in a charging process.

It should be understood that in embodiments of this application, a battery cell is an electrochemical battery cell that includes a positive electrode and a negative electrode. The battery cell usually includes a positive electrode material, a negative electrode material, an electrolyte, a membrane, and a casing. The battery includes the battery cell and a protection circuit board. The protection circuit board usually includes a management chip, a resistor, a capacitor, and a printed circuit board (PCB). One battery may include one or more battery cells.

In embodiments of this application, a battery voltage is a voltage of both terminals of the battery, and a battery cell voltage is a voltage of both terminals of the battery cell.

In addition, in embodiments of this application, when a transistor serves as a switch, that the switch is closed means that a control terminal (for example, a gate) of the switch controls two terminals (for example, a source and a drain) of the switch to be connected. That the switch is opened means that the control terminal (for example, the gate) of the switch controls the two terminals (for example, the source and the drain) of the switch to be disconnected, and in this case, the two terminals of the switch are disconnected, or almost no current is conducted.

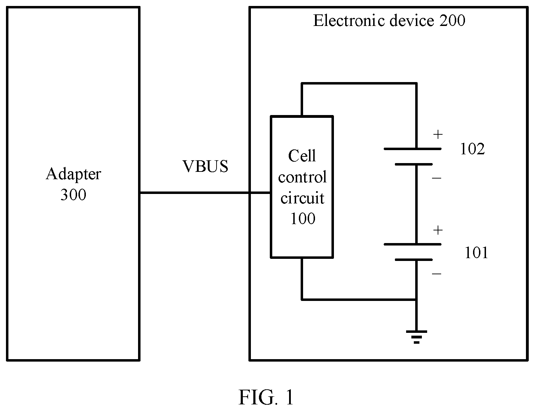

FIG. 1 is a schematic diagram of an application scenario according to an embodiment of this application. As shown in FIG. 1, a battery cell control circuit 100 may be disposed in an electronic device 200, and the circuit 100 is connected to an adapter 300 by using a voltage input port VBUS, to receive a voltage input by the adapter. A first battery cell 101 and a second battery cell 102 that are connected in series are disposed in the electronic device 200. The circuit is configured to control charging and discharging processes of the first battery cell 101 and the second battery cell 102.

Optionally, the first battery cell 101 and the second battery cell 102 may be disposed in a same battery, or may be disposed in different batteries.

Optionally, the voltage input port VBUS of the circuit may be a USB port, and the USB port may support a plurality of standards such as a Type-C standard, a micro USB standard, and a mini USB standard.

Optionally, the electronic device 200 may be a mobile phone, a tablet computer, a handheld electronic device, an intelligent terminal, or another type of electronic device.

In some examples, the circuit 100 may be compatible with different adapters. The adapter may be a customized adapter, or may be a non-customized adapter. The customized adapter may be an adapter used for supporting a high-voltage direct charging mode of dual battery cells. In the high-voltage direct charging mode, the circuit 100 does not need to stabilize a charging current. The non-customized adapter may be an adapter other than the customized adapter that supports the high-voltage direct charging mode.

In some examples, the adapter 300 may communicate with the electronic device 200, and the adapter 300 adjusts a voltage output to the electronic device 200, to adjust a value of the charging current. Therefore, the circuit 100 does not need to stabilize the charging current, in other words, the customized adapter implements a constant-current charging function. A high voltage is usually a voltage greater than 5.5 V The non-customized adapter may include a plurality of types of adapters such as an adapter with an output voltage of 5 V, 9 V, 12 V, 15 V, or another voltage level. The non-customized adapter may perform charging in a compatible charging mode. In the compatible charging mode, the circuit 100 needs to stabilize a charging current, in other words, in the compatible charging mode, the circuit 100 needs to implement the constant-current charging function.

Current stabilization may also be referred to as current regulation, and current stabilization means that a value of a current is controlled to remain unchanged at a constant value or fluctuate only within a quite small range.

Optionally, in the high-voltage direct charging mode, a voltage of the voltage input port VBUS of the circuit 100 is greater than a preset voltage (for example, 5.5 V), the circuit 100 does not perform current stabilization processing on the charging current, and there is an approximate multiple relationship between the voltage of the voltage input port VBUS and a battery voltage. For example, rated voltages of the first battery cell 101 and the second battery cell 102 may be 4 V, in other words, a rated voltage after the dual battery cells are connected in series is 8 V. In this case, the voltage of the voltage input port VBUS of the circuit 100 may be 16.2 V The circuit 100 may buck the input voltage to a half by using an SC converter, to obtain a voltage of 8.1 V, and provide the voltage to the dual battery cells.

Optionally, in the compatible charging mode, the circuit 100 needs to stabilize the charging current. The compatible charging mode can be compatible with adapters whose output voltages are at different voltage levels. For example, the output voltage is 5 V, 9 V, 12 V, or 15 V.

In some examples, the adapter 300 may be replaced with another electronic device that supports reverse power supply.

In some examples, the circuit 100 may be further configured to control voltage equalization, reverse power supply, and discharging functions of the dual battery cells.

Voltage equalization may be implementing voltage balance between the first battery cell 101 and the second battery cell 102.

Reverse power supply may mean that the battery cell in the electronic device reversely supplies power to the outside by using the voltage input port VBUS (for example, a USB port).

Optionally, battery cell discharging may include two scenarios. The first scenario is discharging in a power supply scenario in which the adapter 300 exists, and the second scenario is discharging in a scenario in which the adapter 300 does not exist. The first scenario occurs when load suddenly increases and exceeds a loading capability of the adapter, and the battery cell may discharge for a short or long time to provide a current for a load. In the second scenario, the load is completely maintained by the battery cell by performing discharging. The load may be a circuit other than the battery cell control circuit 100 in the electronic device 200.

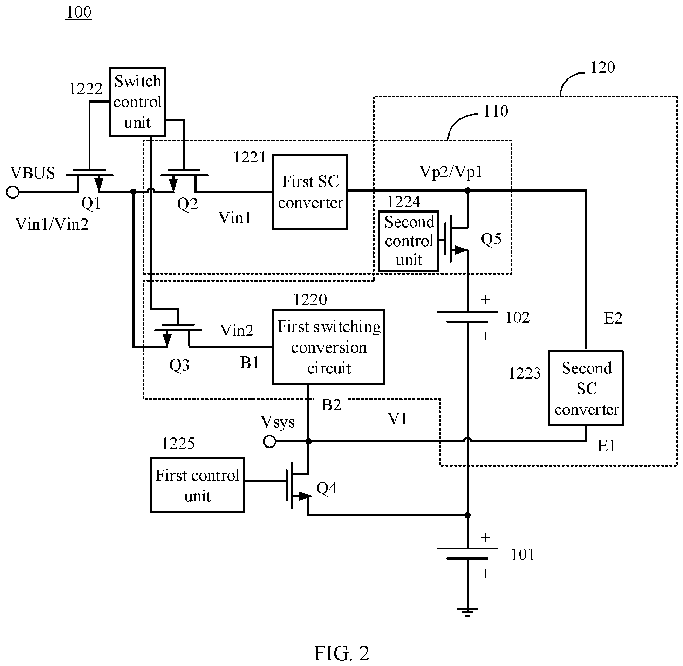

FIG. 2 is a schematic diagram of a battery cell control circuit 100 according to an embodiment of this application. As shown in FIG. 2, the circuit 100 is configured to control charging and discharging of dual battery cells and other functions such as voltage equalization and reverse power supply. The dual battery cells include a first battery cell 101 and a second battery cell 102 that are connected in series, and a cathode of the first battery cell 101 is grounded. For example, the dual battery cells are battery cells disposed in a lithium battery.

As shown in FIG. 2, the circuit 100 includes a first charging path 110 and a second charging path 120.

The first charging path 110 includes a first SC converter 1221, a second transistor Q2, and a fifth transistor Q5.

It should be noted that when the transistor is implemented by a MOSFET, a first terminal and a second terminal of the transistor may be separately a source terminal and a drain terminal of the MOSFET.

For example, when the MOSFET is an N-metal-oxide-semiconductor (NMOS), the first terminal may be the drain terminal, and the second terminal may be the source terminal. When the MOSFET is a P-metal-oxide-semiconductor (PMOS), the first terminal may be the source terminal, and the second terminal may be the drain terminal.

It should be noted that when the MOSFET serves as a switch, the source terminal and the drain terminal may be considered as a same terminal, and are interchangeable. For example, the second transistor Q2 and a third transistor Q3 serve as switches in the circuit 100.

When the transistor is implemented by a bipolar device, a first terminal and a second terminal of the transistor may be separately an emitter and a collector of the bipolar device. For example, when the bipolar device is an NPN bipolar device, the first terminal may be the collector, and the second terminal may be the emitter. When the bipolar device is a PNP bipolar device, the first terminal may be the emitter, and the second terminal may be the collector.

A first terminal and a second terminal of an SC converter or a buck/boost voltage converter separately represent an input terminal and an output terminal. In different working states, the input terminal and the output terminal are interchangeable.

The second transistor Q2 is disposed between a voltage input port VBUS and the first SC converter 1221, a first terminal of the first SC converter 1221 is connected to a second terminal of the second transistor Q2, a second terminal of the first SC converter 1221 is connected to a first terminal of the fifth transistor Q5, a second terminal of the fifth transistor Q5 is configured to connect to an anode of the second battery cell 102, and the voltage input port VBUS is configured to receive an input voltage (Vin1 or Vin2) output by an adapter. An input voltage provided by a customized adapter is represented as Vin1, and an input voltage provided by a non-customized adapter is represented as Vin2.

The second charging path 120 includes a first switching conversion circuit 1220, a second SC converter 1223, the third transistor Q3, and the fifth transistor Q5.

The third transistor Q3 is disposed between the voltage input port VBUS and the first switching conversion circuit 1220, a first terminal B1 of the first switching conversion circuit 1220 is connected to the third transistor Q3, a second terminal B2 of the first switching conversion circuit 1220 is connected to a first terminal E1 of the second SC converter 1223, a second terminal E2 of the second SC converter 1223 is connected to the second terminal of the first SC converter 1221, and the first switching conversion circuit 1220 supports working in a buck mode in a direction from the first terminal B1 to the second terminal B2 of the first switching conversion circuit 1220. For example, the first switching conversion circuit 1220 may be a buck voltage converter, a buck-boost voltage converter, or another type of voltage converter with a buck function.

The second transistor Q2 and the third transistor Q3 may serve as switches. For example, when the second transistor Q2 is turned on, it may indicate that the second transistor Q2 serves as a switch and is in an enabled state, and the circuit is connected. When the second transistor Q2 is switched off, it may indicate that the second transistor Q2 serves as a switch and is in a disabled state, and the circuit is disconnected.

The voltage input port VBUS may be configured to receive a voltage input by the customized adapter or the non-customized adapter. When the customized adapter supplies power, the second transistor Q2 is turned on, the third transistor Q3 is switched off, and the fifth transistor Q5 is turned on, so that the customized adapter supplies power by using the first charging path 110, and the circuit 100 works in a high-voltage direct charging mode. When the non-customized adapter supplies power, the second transistor Q2 is switched off, the third transistor Q3 is turned on, and the fifth transistor Q5 is turned on, so that the non-customized adapter supplies power by using the second charging path 120, and the circuit 100 works in a compatible charging mode.

As shown in FIG. 2, the input voltage provided by the customized adapter is represented as Vin1, and the input voltage provided by the non-customized adapter is represented as Vin2.

Next, working principles of the first charging path 110 and the second charging path 120 are described with reference to FIG. 2.

### (A). Working principle of the first charging path 110

As shown in FIG. 2, when the first charging path 110 works, the second transistor Q2 is turned on, and the first charging path 110 is configured to: receive the first input voltage Vin1 provided by the customized adapter, and bucks the first input voltage Vin1 by using the first SC converter 1221, to obtain a first supply voltage Vp1. The first supply voltage Vp1 is used to charge the first battery cell 101 and the second battery cell 102.

The customized adapter is applicable to the high-voltage direct charging mode. For example, the first input voltage Vin1 is approximately 16.2 V, the first supply voltage Vp1 is approximately 8.1 V, and a rated voltage of the first battery cell 101 or the second battery cell 102 is 4 V.

In some examples, the VBUS port may be a USB port, and the USB port may support a plurality of standards such as a Type-C standard, a micro USB standard, and a mini USB standard.

When the first charging path 110 works, the fifth transistor Q5 serves as a power switch and is in an enabled state. The first supply voltage Vp1 is provided to an anode of the second battery cell 102 by using the fifth transistor Q5.

It should be noted that, in some cases, in the high-voltage direct charging mode, no current stabilization processing needs to be performed on a charging current, in other words, a circuit control module used for current stabilization may not be disposed in the first charging path 110.

### (B). Working principle of the second charging path 120

When the second charging path 120 works, the third transistor Q3 is turned on, and the second charging path 120 is configured to: receive the second input voltage Vin2 provided by the non-customized adapter, buck the second input voltage Vin2 by using the first switching conversion circuit 1220, to obtain a first voltage V1, and then boost the first voltage V1 by using the second SC converter, to obtain a second supply voltage Vp2. The second supply voltage Vp2 is to be provided to an anode to the second battery cell 102 to charge the first battery cell 101 and the second battery cell 102.

The first switching conversion circuit 1220 supports working in the buck mode in the direction from the first terminal B1 to the second terminal B2, to implement variable-ratio bucking. The second SC converter 1223 supports a fixed-ratio boost mode. The first switching conversion circuit 1220 and the second SC converter 1223 are combined to perform bucking/boosting processing on voltages with different values that are input by the non-customized adapter, to obtain the second supply voltage Vp2 applicable to charging the battery cell.

Optionally, the second SC converter 1223 may implement both a forward bucking function and a reverse boosting function. When the second SC converter 1223 boosts a voltage input by the first terminal E1, and outputs the voltage by using the second terminal E2, the mode may be referred to as a charge pump (CP) mode. When the second SC converter 1223 bucks a voltage input by the second terminal E2, and outputs the voltage to the first terminal E1, the mode may be referred to as an SC buck mode.

For example, a voltage conversion ratio of the second SC converter 1223 is 2:1. In other words, a voltage of the second terminal E2 of the second SC converter 1223 is twice a voltage of the first terminal E1.

For example, when the second charging path 120 works, the second SC converter 1223 works in the CP mode.

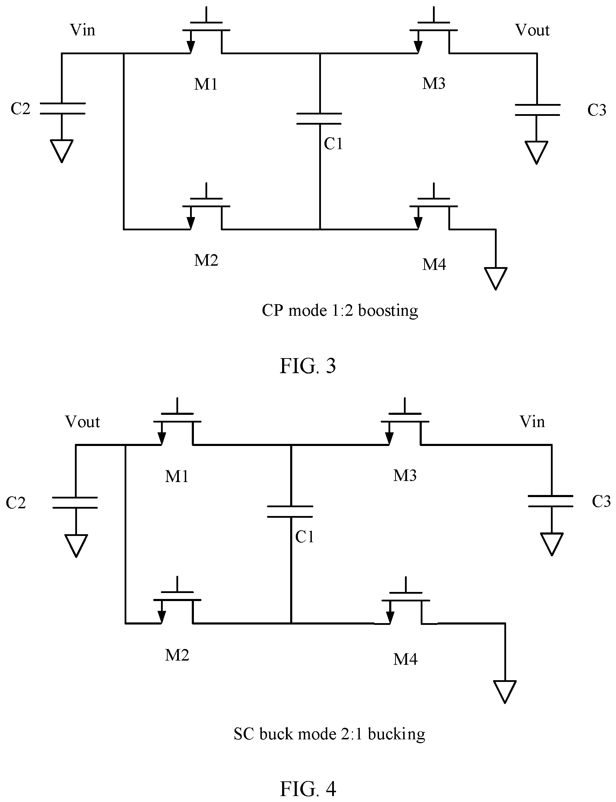

For example, FIG. 3 and FIG. 4 are schematic diagrams of a structure of an SC converter according to an embodiment of this application. An SC converter in FIG. 3 works in a 1:2 boost mode, namely, the CP mode, by interchanging the input terminal Vin and the output terminal Vout and changing control logic. An SC converter in FIG. 4 works in a 2:1 buck mode, namely, the SC buck mode.

For example, the first SC converter 1221 and the second SC converter 1223 may be implemented by the SC converters shown in FIG. 3 and FIG. 4.

As shown in FIG. 3 and FIG. 4, the SC converter includes transistors M1 to M4, a capacitor C1, an input capacitor C2, and an output capacitor C3. The SC converter further includes a corresponding control circuit (not shown in the figure). The control circuit controls the transistors M1 to M4 to be turned on or off to control the SC converter to be in the boost mode or the buck mode.

When the SC converter works in the 1:2 boost mode, both the transistors M1 and M2 receive an input voltage Vin. The transistor M3 is configured to output an output voltage Vout, and the transistor M4 is grounded. A first terminal of the capacitor C1 is connected to the transistors M1 and M3, and a second terminal of the capacitor C1 is connected to the transistors M2 and M4.

As shown in FIG. 3, in the 1:2 boost mode, the SC converter periodically works. One working period includes two phases. In a first phase, M1 and M4 are turned on, and a voltage of both terminals of the capacitor C1 is charged to Vin. In a second phase, M1 and M4 are first switched off, and then M2 and M3 are turned on. A voltage Vout is equal to Vin plus the voltage difference (equal to Vin) between both terminals of the capacitor C1, in other words, Vout=2×Vin.

As shown in FIG. 4, when the SC converter works in the 2:1 buck mode, the transistor M3 receives an input voltage Vin, the transistor M4 is grounded, and both the transistors M1 and M2 are configured to output an output voltage Vout.

When the SC converter works in the 2:1 buck mode, the SC converter periodically works. One working period includes two phases. In a first phase, the transistors M4 and M1 are turned on, and a voltage of both terminals of the capacitor C1 is discharged to Vin. In a second phase, the transistors M4 and M1 are first switched off, and then the transistors M3 and M2 are turned on. A voltage Vout is equal to Vin minus the voltage difference (equal to Vout) between both terminals of the capacitor C1, in other words, 2×Vout=Vin.

It should be understood that FIG. 3 and FIG. 4 are merely examples, and the SC converter may alternatively has another type of implementation.

Optionally, in addition to working in the buck mode, the first SC converter 1221 may work in a bypass mode by changing control logic. In the bypass mode, the first SC converter 1221 is equivalent to a power switch, and has no voltage conversion function. In an example in which a ratio of an input voltage to an output voltage of the first SC converter 1221 is 2:1, when the first SC converter 1221 works in the buck mode, the circuit can implement charging at a voltage that is four times a battery cell voltage, in other words, a charging rate is four times that in a single-battery cell mode. When the first SC converter 1221 works in the bypass mode, the circuit can implement charging at a voltage that is twice a battery cell voltage, in other words, a charging rate is twice that in the single-battery cell mode.

Optionally, unlike the second SC converter 1223, the first SC converter 1221 may not include a logic circuit of a CP, in other words, the first SC converter 1221 does not include control logic for implementing reverse boosting.

In some examples, control logic is adjusted, so that the buck mode is supported from the first terminal B1 to the second terminal B2 of the first switching conversion circuit 1220, and the boost mode is supported from the second terminal B2 to the first terminal B1. The first switching conversion circuit 1220 may be implemented by a buck voltage converter.

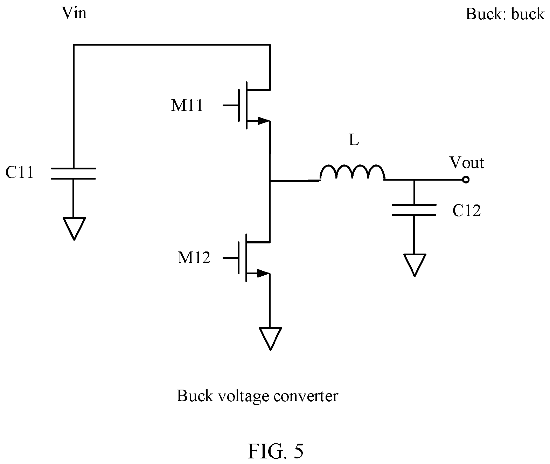

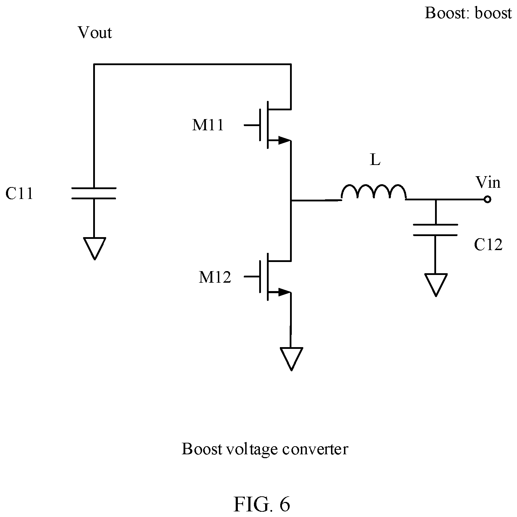

For example, FIG. 5 and FIG. 6 are respectively schematic diagrams of structures of a buck voltage converter and a boost voltage converter according to an embodiment of this application. The first switching conversion circuit 1220 in FIG. 2 may be implemented by the buck voltage converter in FIG. 5. After an input terminal Vin and an output terminal Vout of the buck voltage converter in FIG. 5 are interchanged, the first switching conversion circuit 1220 is the boost voltage converter in FIG. 6.

As shown in FIG. 5, the buck voltage converter includes transistors M11 and M12, an inductor L, an input capacitor C11, and an output capacitor C12. In addition, the buck voltage converter further includes a control circuit (not shown in the figure), configured to control the transistors M11 and M12 to be turned on or off. A structure of the boost voltage converter in FIG. 6 is the same as that in FIG. 5, except that the input terminal Vin and the output terminal Vout are interchanged. Correspondingly, the input capacitor C11 and the output capacitor C12 are also interchanged.

As shown in FIG. 5, the buck voltage converter periodically works, and Vout<Vin. One working period includes two phases. In a first phase, M11 is turned on, and a current of the inductor L increases, and in this case, the inductor accumulates energy. In a second phase, M11 is first switched off, then M12 is turned on, the current of the inductor L decreases, and energy of the inductor is transferred to the output end Vout.

As shown in FIG. 6, the boost voltage converter periodically works, and Vout>Vin. One working period includes two phases. In a first phase, M12 is turned on, and a current of the inductor L increases, and in this case, the inductor accumulates energy. In a second phase, M12 is first switched off, then M11 is turned on, the current of the inductor L decreases, and energy of the inductor is transferred to output Vout.

As can be learned from FIG. 5 and FIG. 6, for a same entity circuit, input Vin and output Vout of the circuit, are interchanged, so that the circuit can be used as a buck voltage converter or a boost voltage converter.

In some examples, the first switching conversion circuit 1220 may be alternatively a buck-boost voltage converter.

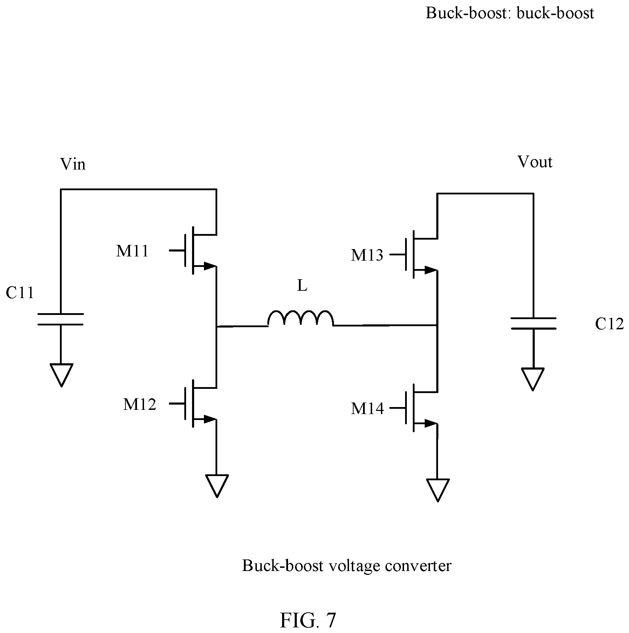

For example, FIG. 7 is a schematic diagram of a structure of a buck-boost voltage converter according to an embodiment of this application. As shown in FIG. 7, the buck-boost voltage converter includes transistors M11 to M14, an inductor L, an input capacitor C11, and an output capacitor C12. In addition, the buck-boost voltage converter further includes a control circuit (not shown in the figure) configured to control the transistors M11 to M14 to be turned on or off. Same-polarity boosting or bucking is supported between an input terminal Vin and an output terminal Vout of the circuit.

When the buck-boost voltage converter works in the buck mode, Vout<Vin, working principles of the transistors M11 and M12 and the inductor L are similar to those in FIG. 5, M13 is in a normally-enabled state, and M14 is in a normally-disabled state.

When the buck-boost voltage converter works in the boost mode, Vout>Vin, working principles of the transistors M13 and M14 and the inductor L are similar to those in FIG. 5, M11 is in a normally-enabled state, and M12 is in a normally-disabled state.

It should be understood that FIG. 5 to FIG. 7 are merely examples instead of limitations, and the buck voltage converter, the boost voltage converter, or the buck-boost voltage converter may alternatively has another type of implementation.

The fifth transistor Q5 in FIG. 2 is configured to stabilize a current when the second charging path 120 works.

In this embodiment of this application, the first charging path 110 and the second charging path 120 are disposed in the battery cell control circuit 100. The first SC converter 1221 is used in the first charging path 110 to implement fixed-ratio voltage conversion, and the high-voltage direct charging mode may be implemented by using the first SC converter 1221, to be suitable for the customized adapter. The second charging path 120 includes the first switching conversion circuit 1220 and the second SC converter 1223, the first switching conversion circuit 1220 can support working in the buck mode in the direction from the first terminal B1 to the second terminal B2 of the first switching conversion circuit 1220 and implement variable-ratio voltage conversion, to be suitable for the non-customized adapter. In this way, the circuit 100 can be compatible with the customized adapter and the non-customized adapter, so that flexibility and management efficiency of battery cell charging and discharging control are improved.

Optionally, a working status of the fifth transistor Q5 may be controlled by a second control circuit 1224. For example, when the second charging path 120 works, the second control circuit 1224 may control a gate voltage of the fifth transistor Q5, so that a value of a current that passes through the fifth transistor Q5 is stabilized within a preset range. When the first charging path 110 works, the second control circuit 1224 may control the fifth transistor Q5 to be in a fully enabled state and be equivalent to a power switch.

"Fully enabled" may mean that an on-resistance of the transistor is minimized. In this embodiment of this application, when the transistor is fully enabled, it may be considered that the transistor is in a switched state. In this case, the transistor works in a deep linear region. When the transistor is configured to stabilize a voltage/a current, it may be considered that the transistor is in an adjusted state. In this case, the transistor works in a saturated region or a linear region.

When the transistor serves as a power switch, a gate voltage of the transistor is at a high/low level. When the transistor is configured to stabilize a voltage/a current, the transistor is in an adjusted state, and a gate voltage of the transistor is at an intermediate level.

In some examples, when the second charging path 120 works, the fifth transistor Q5 is configured to stabilize a current, and the second control circuit 1224 adjusts the gate voltage of the fifth transistor Q5 at a CC precharge stage of the battery cell to implement CC current stabilization. In fast CC, CV, and discharging scenarios, the second control circuit 1224 controls the transistor Q5 to be fully enabled, and the transistor Q5 is embodied as a power switch.

It should be noted that the precharge stage belongs to a CC stage. A manufacturer sometimes divides a CC of a lithium battery into three stages: trickle-charge, pre-charge and fast-charge stages.

Optionally, the circuit 100 further includes a fourth transistor Q4, a first terminal of the fourth transistor Q4 is connected to the second terminal B2 of the first switching conversion circuit 1220 and the first terminal E1 of the second SC converter 1223, and a second terminal of the fourth transistor Q4 is connected to an anode of the first battery cell 101.

Optionally, a working status of the fourth transistor Q4 may be controlled by a first control circuit 1225. The first control circuit 1225 controls the fourth transistor Q4 to be in different working states by controlling a gate voltage of the fourth transistor Q4.

Optionally, the circuit 100 in FIG. 2 may further implement a voltage equalization function, a discharging function, and a reverse power supply function.

### (C). Voltage equalization function

Optionally, the fourth transistor Q4, the fifth transistor Q5, and the second SC converter 1223 are configured to implement the voltage equalization function of the dual battery cells.

When voltage equalization is performed between the first battery cell 101 and the second battery cell 102 by using the second SC converter 1223, the fourth transistor Q4 serves as a power switch and is in an enabled state, and the fifth transistor Q5 serves as a power switch and is in an enabled state.

For example, when voltages of the first battery cell 101 and the second battery cell 102 are unequal, the first control circuit 1225 is configured to control the fourth transistor Q4 to be turned on. Therefore, a loop in which the first battery cell 101, the fourth transistor Q4, the second SC converter 1223, and the second battery cell 102 are located is connected. The second SC converter 1223 implements dual-battery cell voltage equalization in the SC mode or the CP mode, and implement charge transfer between the first battery cell 101 and the second battery cell 102, so that the voltages of the dual battery cells are equalized.

Specifically, when a voltage of the second battery cell 102 is greater than a voltage of the first battery cell 101, the second SC converter 1223 transfers charges of the second battery cell 102 to the first battery cell 101. In this case, the second SC converter 1223 works in the SC mode, in other words, a voltage input by the second terminal E2 is bucked and is output to the first terminal E1.

When a voltage of the first battery cell 101 is greater than a voltage of the second battery cell 102, the second SC converter 1223 transfers charges of the first battery cell to the second battery cell. In this case, the second SC converter 1223 works in the CP mode, in other words, a voltage input by the first terminal E1 is boosted and is output by using the second terminal E2.

Optionally, when voltage equalization is performed on the dual battery cells, the first control circuit 1225 may control the fourth transistor Q4 to be in a fully enabled state, in other words, the fourth transistor Q4 is embodied as a power switch.

In this embodiment of this application, the transistor Q4 and the second SC converter 1223 may be used to implement the voltage equalization function of the dual battery cells, so that design complexity and product costs of the circuit 100 are reduced.

### (D). Discharging function

In some examples, when power used by a load exceeds a power supply capability of the adapter, the transistor Q4 and the first battery cell 101 may implement a function of discharging to the load. For example, the second terminal B2 of the first switching conversion circuit 1220 (or the first terminal E1 of the second SC converter) is connected to a system power supply terminal Vsys, and the first control circuit 1225 is further configured to: when a current of the load exceeds the power supply capability of the adapter, control the fourth transistor Q4 to be turned on, so that the first battery cell 101 supplies power to the load by using the system power supply terminal Vsys.

The load may be a circuit other than the battery cell control circuit 100 in the electronic device 200. When the adapter performs charging, the adapter needs to supply power to the circuit in addition to the battery cell. However, if the adapter cannot supply sufficient power, the battery cell needs to perform instantaneous recharging on the load. In this case, the first battery cell 101 may supply power to the load by using the system power supply terminal Vsys. In this case, the fourth transistor Q4 is in an enabled state, and a voltage difference between the anode of the first battery cell 101 and the system power supply terminal Vsys is made constant by adjusting the gate voltage, so that the fourth transistor Q4 can be multiplexed for the case of discharging to the load, thereby reducing design complexity and product costs of the battery cell control circuit.

In the discharging scenario, the first control circuit 1225 may simulate a feedback loop inside to adjust the gate voltage of the transistor Q4, so that discharging to the load is implemented.

### (E). Reverse power supply

In some examples, the first switching conversion circuit 1220, the second SC converter 1223, and the fifth transistor Q5 may further implement the reverse power supply function. For example, in a case of reverse power supply, the second SC converter 1223 works in the buck mode in a direction from the second terminal E2 to the first terminal E1 of the second SC converter 1223, the first switching conversion circuit 1220 works in the boost mode in a direction from the second terminal B2 to the first terminal B 1, and the fifth transistor Q5 serves as a power switch and is in an enabled state.

Specifically, the second terminal E2 of the second SC converter 1223 may receive a voltage provided by the second battery cell 102, buck the voltage, and output the voltage by using the first terminal E1. The second terminal B2 of the first switching conversion circuit 1220 receives a voltage output by the first terminal E1 of the second SC converter 1223, boosts the voltage, and then outputs the reverse supply voltage to the outside by using the first terminal B1.

In this embodiment of this application, the second SC converter 1223, the first switching conversion circuit 1220, and the fifth transistor Q5 can be multiplexed in the case of reverse power supply, thereby reducing design complexity and product costs of the battery cell control circuit.

In this embodiment of this application, the fourth transistor Q4 is in an enabled state in the following cases: Voltage equalization between the first battery cell and the second battery cell is implemented and the first battery cell discharges to the load. Therefore, the fourth transistor Q4 may be multiplexed in the cases of voltage equalization and discharging to the load, so that design complexity and product costs of the battery cell control circuit are reduced.

Optionally, as shown in FIG. 2, the circuit 100 further includes a first transistor Q1, a first terminal of the first transistor Q1 is connected to the voltage input port VBUS of the circuit 100, and a second terminal of the first transistor Q1 is connected to a first terminal of the second transistor Q2 and a first terminal of the third transistor Q3.

Optionally, the first transistor Q1 may be disposed in a same chip as another component in the circuit 100, or may be independently disposed.

Optionally, the first transistor Q1, the second transistor Q2, and the third transistor Q3 may jointly implement a switching function in the battery cell control circuit.

Optionally, turning on or off of a transistor (for example, the first transistor Q1, the second transistor Q2, or the third transistor Q3) that serves as a switch in the circuit 100 may be controlled by a switch control circuit 1222.

For example, when the first charging path 110 works, the switch control circuit 1222 may switch off the transistor Q3, and turn on the transistors Q1 and Q2. When the second charging path 120 works, the switch control circuit 1222 may switch off the transistor Q2, and turn on the transistors Q1 and Q3.

Optionally, the transistors Q1 to Q5 may be implemented by MOSFETs.

Optionally, the components in the circuit 100 may be integrated into one chip, or may be separately disposed in a plurality of chips. This is not limited in this embodiment of this application. For example, the transistors Q1 to Q3 in the circuit 100 may be integrated into one chip, and the switch control circuit 1222 may be integrated into another chip. Alternatively, the transistors Q4 and Q5 in the circuit 100 are integrated into one chip, and the first control circuit 1225 and the second control circuit 1224 are integrated into another chip.

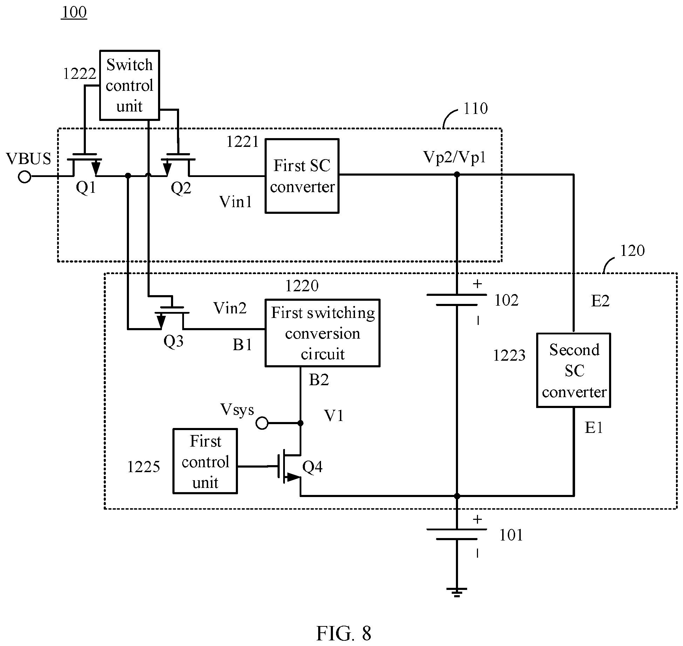

FIG. 8 is a schematic diagram of a circuit structure of a battery cell control circuit 100 according to another embodiment of this application. Differences between the circuits shown in FIG. 8 and FIG. 2 are as follows: A fifth transistor Q5 is removed from the circuit 100 in FIG. 8, and a dual-battery cell current stabilization function of the fifth transistor Q5 is transferred to a fourth transistor Q4 for execution. A first terminal E1 of a second SC converter 1223 is connected to an anode of a first battery cell 101.

For brevity, content in FIG. 8 that is the same as or similar to that in FIG. 2 is not described herein again. The circuit 100 in FIG. 8 includes a first charging path 110 and a second charging path 120. The first charging path 110 includes a first SC converter 1221 and a second transistor Q2. The second charging path 120 includes a first switching conversion circuit 1220, the second SC converter 1223, a third transistor Q3, and the fourth transistor Q4.

### (A). Working principle of the first charging path 110

Compared with FIG. 2, the fifth transistor Q5 is not disposed in the first charging path 110 in FIG. 8. Therefore, a first supply voltage Vp1 may be directly provided to an anode of a second battery cell 102 without passing through another component, so that a circuit of the first charging path 110 can be simplified. Working principles of remaining parts are similar, and details are not described herein again.

### (B). Working principle of the second charging path 120

Compared with FIG. 2, the second charging path 120 in FIG. 8 does not need to include the fifth transistor Q5, but includes the fourth transistor Q4, and the fourth transistor Q4 may be configured to stabilize a current. Working principles of remaining parts are similar, and details are not described herein again.

It should be understood that a current stabilization principle of the fourth transistor Q4 is similar to a current stabilization principle of the fifth transistor Q5 in FIG. 2. For brevity, details are not described herein again.

### (C). Voltage equalization function

In FIG. 8, the second SC converter 1223 is configured to implement a voltage equalization function of the dual battery cells. Compared with FIG. 2, a voltage equalization path does not include the fourth transistor Q4 or the fifth transistor Q5.

For example, when voltages of the first battery cell 101 and the second battery cell 102 are unequal, the second SC converter 1223 enables an SC mode or a CP mode, to implement charge transfer between the first battery cell 101 and the second battery cell 102, so that the voltages of the dual battery cells are equalized.

In this embodiment of this application, the second SC converter 1223 may be multiplexed, so that a compatible charging mode of the dual battery cells is implemented, and the voltage equalization function of the dual battery cells is also implemented, thereby reducing design complexity and product costs of the circuit.

### (D). Discharging function

In some examples, when power used by a load exceeds a power supply capability of an adapter, the transistor Q4 and the first battery cell 101 may implement a function of discharging to the load. A principle of the discharging function is similar to that in FIG. 2. For brevity, details are not described herein again.

### (E). Reverse power supply

In some examples, the first switching conversion circuit 1220, the second SC converter 1223, and the fourth transistor Q4 may further implement the reverse power supply function. For example, in a case of reverse power supply, the second SC converter 1223 works in a buck mode in a direction from a second terminal E2 to the first terminal E1 of the second SC converter 1223, the first switching conversion circuit 1220 works in a boost mode in a direction from a second terminal B2 to a first terminal B 1, and the fourth transistor Q4 serves as a power switch and is in an enabled state.

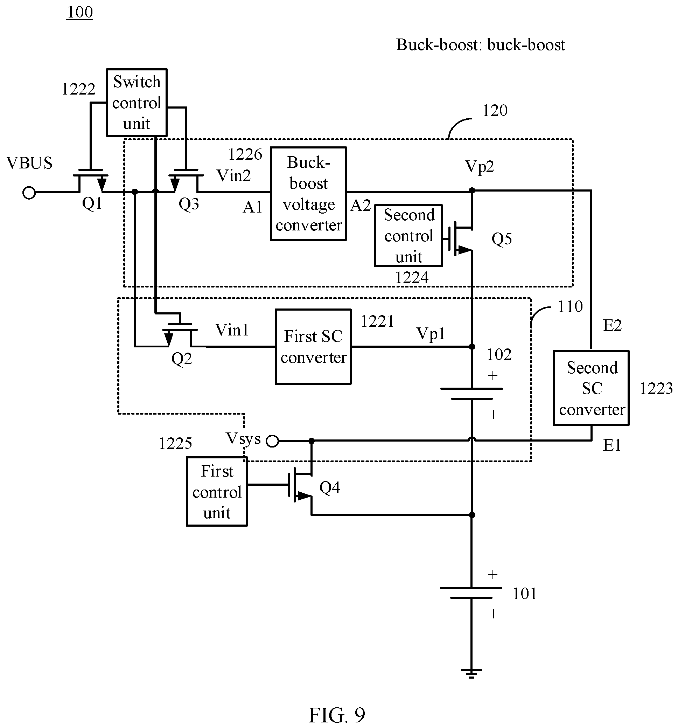

FIG. 9 is a schematic diagram of a battery cell control circuit 100 according to an embodiment of this application. Differences between the circuits 100 in FIG. 9 and FIG. 8 are as follows: In a second charging path 120, the circuit 100 in FIG. 9 uses a buck-boost voltage converter 1226 instead of a first switching conversion circuit 1220. In addition, in a first charging path 110, a first SC converter 1221 is directly connected to an anode of a second battery cell 102.

As shown in FIG. 9, the circuit 100 includes the first charging path 110 and the second charging path 120. The first charging path 110 includes the first SC converter 1221 and a second transistor Q2. The second charging path 120 includes the buck-boost voltage converter 1226, a third transistor Q3, and a fifth transistor Q5.

### (A). Working principle of the first charging path 110

Compared with FIG. 2, the first charging path 110 in FIG. 9 does not include the fifth transistor Q5. Therefore, in a high-voltage direct charging mode, a charging current does not need to pass through the fifth transistor Q5, so that a circuit of the first charging path 110 can be simplified, thereby improving charging efficiency. Working principles of remaining parts are similar. For brevity, details are not described herein again.

### (B). Working principle of the second charging path 120

Compared with FIG. 2, the buck-boost voltage converter 1226 in FIG. 9 can implement variable-ratio boosting or bucking. In other words, in a compatible charging mode, a charging current passes through the third transistor Q3, the buck-boost voltage converter 1226, and the fifth transistor Q5 to charge dual battery cells. In this way, compatible charging is implemented without intervention of a second SC converter 1223, so that management efficiency of the circuit 100 is improved.

The fifth transistor Q5 is configured to stabilize a current when the second charging path 120 works.

Optionally, the buck-boost voltage converter 1226 may be a unidirectional buck-boost voltage converter, or may be a bidirectional buck-boost voltage converter. When the buck-boost voltage converter 1226 is a bidirectional buck-boost voltage converter, a reverse power supply function may be further implemented.

### (C). Voltage equalization function

In FIG. 9, the fourth transistor Q4, the fifth transistor Q5, and the second SC converter 1223 are configured to implement the voltage equalization function of the dual battery cells. A working principle of the voltage equalization function is similar to that in FIG. 2. For brevity, details are not described herein again.

### (D). Discharging function

In some examples, when power used by a load exceeds a power supply capability of an adapter, the transistor Q4 and the first battery cell 101 may implement a function of discharging to the load. A first terminal of the fourth transistor Q4 is connected to a system power supply terminal Vsys, and when the first battery cell 101 supplies power to a load by using the system power supply terminal Vsys, the fourth transistor Q4 is in an enabled state, and a voltage difference between an anode of the first battery cell 101 and the system power supply terminal Vsys is made constant by adjusting a gate voltage of the fourth transistor Q4.

A principle of the discharging function is similar to that in FIG. 2. For brevity, details are not described herein again.

### (E). Reverse power supply

In some examples, when the buck-boost voltage converter 1226 is a bidirectional buck-boost voltage converter, the bidirectional buck-boost voltage converter 1226 and the fifth transistor Q5 may further implement the reverse power supply function. The bidirectional buck-boost voltage converter 1226 may bidirectionally implement variable-ratio boosting or bucking conversion of a voltage.

For example, when the dual battery cells perform reverse power supply, the bidirectional buck-boost voltage converter 1226 is configured to: receive, by using a second terminal A2 of the bidirectional buck-boost voltage converter 1226, a voltage output by the second battery cell 102, boost or buck the voltage, and output the reverse supply voltage by using a first terminal A1 of the bidirectional buck-boost voltage converter 1226. The fifth transistor Q5 serves as a power switch and is in an enabled state.

In this embodiment of this application, the bidirectional buck-boost voltage converter 1226 may be multiplexed to implement the compatible charging mode of the dual battery cells and the reverse power supply function of the battery cells, so that design complexity and product costs of the circuit are reduced.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

## Claims

1. A battery cell control circuit (100), wherein the battery cell comprises a first battery cell (101) and a second battery cell (102) that are connected in series, a cathode of the first battery cell (101) is grounded, and the circuit comprises:
a first charging path (110), comprising a first switched capacitor, SC, converter (1221), a second transistor Q2, and a fifth transistor Q5, wherein the second transistor Q2 is disposed between a voltage input port and the first SC converter (1221), a first terminal of the first SC converter (1221) is connected to the second transistor Q2, a second terminal of the first SC converter (1221) is connected to a first terminal of the fifth transistor Q5, a second terminal of the fifth transistor Q5 is configured to connect to an anode of the second battery cell (102), and the voltage input port is configured to receive an input voltage;
a second charging path (120), comprising a first switching conversion circuit (1220), a second SC converter (1223), a third transistor Q3, and the fifth transistor Q5, wherein the third transistor Q3 is disposed between the voltage input port and the first switching conversion circuit (1220), a first terminal of the first switching conversion circuit (1220) is connected to the third transistor Q3, a second terminal of the first switching conversion circuit (1220) is connected to a first terminal of the second SC converter (1223), a second terminal of the second SC converter (1223) is connected to the second terminal of the first SC converter (1221), and the first switching conversion circuit (1220) is configured to support working in a buck mode in a direction from the first terminal to the second terminal of the first switching conversion circuit (1220),
**characterized in that** the fifth transistor Q5 serves as a power switch and is in an enabled state when the first charging path works; and
the fifth transistor Q5 is configured to stabilize a charging current when the second charging path works, wherein current stabilization means that a value of the charging current is controlled to remain unchanged at a constant value.

2. The circuit according to claim 1, wherein when the first charging path works, the second transistor Q2 is configured to serve as a switch and is turned on, and the third transistor Q3 is configured to serve as a switch and is switched off; and when the second charging path (120) works, the second transistor Q2 is configured to serve as a switch and is switched off, and the third transistor Q3 is configured to serve as a switch and is turned on.

3. The circuit (100) according to claim 1 or 2, wherein the second SC converter (1223) is configured to support a boost mode in a direction from the first terminal to the second terminal of the second SC converter (1223) and the buck mode in a direction from the second terminal to the first terminal of the second SC converter (1223).

4. The circuit (100) according to any one of claims 1 to 3, wherein the circuit further comprises a fourth transistor Q4, a first terminal of the fourth transistor Q4 is connected to the second terminal of the first switching conversion circuit (1220) and the first terminal of the second SC converter (1223), and a second terminal of the fourth transistor Q4 is connected to an anode of the first battery cell (101).

5. The circuit according to claim 3, wherein when voltage equalization is performed between the first battery cell (101) and the second battery cell (102) by using the second SC converter (1223), the fourth transistor Q4 is configured to serve as a power switch and is in an enabled state, and the fifth transistor Q5 is configured to serve as a power switch and is in an enabled state.

6. The circuit (100) according to claim 4, wherein the first terminal of the fourth transistor Q4 is connected to a system power supply terminal; and
when the first battery cell (101) supplies power to a load by using the system power supply terminal, the fourth transistor Q4 is in an enabled state, and a voltage difference between the anode of the first battery cell (101) and the system power supply terminal is made constant by adjusting a gate voltage of the fourth transistor Q4.

7. The circuit (100) according to any one of claims 1 to 4 or claim 6, wherein when the first battery cell (101) and the second battery cell (102) are configured to supply power by using the second SC converter (1223) and the first switching conversion circuit (1220), the second SC converter (1223) are configured tc work in the buck mode in the direction from the second terminal to the first terminal of the second SC converter (1223), the first switching conversion circuit (1220) is configured to work in the boost mode in a direction from the second terminal to the first terminal of the first switching conversion circuit (1220), and the fifth transistor Q5 is configured to serve as a power switch and is in an enabled state.

8. The circuit (100) according to any one of claims 1 to 4 or claim 6 or 7, further comprising a first transistor Q1, wherein a first terminal of the first transistor Q1 is connected to the voltage input port, and a second terminal of the first transistor Q1 is connected to a first terminal of the second transistor Q2 and a first terminal of the third transistor Q3.

9. An electronic device (200), comprising:
a first battery cell (101) and a second battery cell (102) that are connected in series; and
the circuit according to any one of claims 1 to 4 or any one of claims 6 to 8, wherein the circuit is configured to control the first battery cell (101) and the second battery cell (102).

## Patentansprüche

1. Batteriezellensteuerschaltung (100), wobei die Batteriezelle eine erste Batteriezelle (101) und eine zweite Batteriezelle (102), die in Reihe geschaltet sind, umfasst, eine Kathode der ersten Batteriezelle (101) geerdet ist und die Schaltung umfasst:
einen ersten Ladepfad (110), der einen ersten geschalteten Kondensator(SC)-Wandler (1221), einen zweiten Transistor Q2 und einen fünften Transistor Q5 umfasst, wobei der zweite Transistor Q2 zwischen einem Spannungseingangsanschluss und dem ersten SC-Wandler (1221) angeordnet ist, ein erster Anschluss des ersten SC-Wandlers (1221) mit dem zweiten Transistor Q2 verbunden ist, ein zweiter Anschluss des ersten SC-Wandlers (1221) mit einem ersten Anschluss des fünften Transistors Q5 verbunden ist, ein zweiter Anschluss des fünften Transistors Q5 konfiguriert ist, um mit einer Anode der zweiten Batteriezelle (102) verbunden zu sein, und der Spannungseingangsanschluss konfiguriert ist, um eine Eingangsspannung zu empfangen;
einen zweiten Ladepfad (120), der eine erste Schaltumwandlungsschaltung (1220), einen zweiten SC-Wandler (1223), einen dritten Transistor Q3 und den fünften Transistor Q5 umfasst, wobei der dritte Transistor Q3 zwischen dem Spannungseingangsanschluss und der ersten Schaltumwandlungsschaltung (1220) angeordnet ist, ein erster Anschluss der ersten Schaltumwandlungsschaltung (1220) mit dem dritten Transistor Q3 verbunden ist, ein zweiter Anschluss der ersten Schaltumwandlungsschaltung (1220) mit einem ersten Anschluss des zweiten SC-Wandlers (1223) verbunden ist, ein zweiter Anschluss des zweiten SC-Wandlers (1223) mit dem zweiten Anschluss des ersten SC-Wandlers (1221) verbunden ist und die erste Schaltumwandlungsschaltung (1220) konfiguriert ist, um das Arbeiten in einem Abwärtsmodus in einer Richtung von dem ersten Anschluss zu dem zweiten Anschluss der ersten Schaltumwandlungsschaltung (1220) zu unterstützen, **dadurch gekennzeichnet, dass** der fünfte Transistor Q5 als ein Leistungsschalter dient und sich in einem aktivierten Zustand befindet, wenn der erste Ladepfad arbeitet; und der fünfte Transistor Q5 konfiguriert ist, um einen Ladestrom zu stabilisieren, wenn der zweite Ladepfad arbeitet, wobei eine Stromstabilisierung bedeutet, dass ein Wert des Ladestroms gesteuert wird, um bei einem konstanten Wert unverändert zu bleiben.

2. Schaltung nach Anspruch 1, wobei, wenn der erste Ladepfad arbeitet, der zweite Transistor Q2 konfiguriert ist, um als ein Schalter zu dienen, und angeschaltet ist und der dritte Transistor Q3 konfiguriert ist, um als ein Schalter zu dienen, und ausgeschaltet ist; und, wenn der zweite Ladepfad (120) arbeitet, der zweite Transistor Q2 konfiguriert ist, um als ein Schalter zu dienen, und ausgeschaltet ist und der dritte Transistor Q3 konfiguriert ist, um als ein Schalter zu dienen, und angeschaltet ist.

3. Schaltung (100) nach Anspruch 1 oder 2, wobei der zweite SC-Wandler (1223) konfiguriert ist, um einen Boost-Modus in einer Richtung von dem ersten Anschluss zu dem zweiten Anschluss des zweiten SC-Wandlers (1223) und den Abwärtsmodus in einer Richtung von dem zweiten Anschluss zu dem ersten Anschluss des zweiten SC-Wandlers (1223) zu unterstützen.

4. Schaltung (100) nach einem der Ansprüche 1 bis 3, wobei die Schaltung ferner einen vierten Transistor Q4 umfasst, ein erster Anschluss des vierten Transistors Q4 mit dem zweiten Anschluss der ersten Schaltumwandlungsschaltung (1220) und dem ersten Anschluss des zweiten SC-Wandlers (1223) verbunden ist und ein zweiter Anschluss des vierten Transistors Q4 mit einer Anode der ersten Batteriezelle (101) verbunden ist.

5. Schaltung nach Anspruch 3, wobei, wenn ein Spannungsausgleich zwischen der ersten Batteriezelle (101) und der zweiten Batteriezelle (102) durch Verwenden des zweiten SC-Wandlers (1223) durchgeführt wird, der vierte Transistor Q4 konfiguriert ist, um als ein Leistungsschalter zu dienen, und sich in einem aktivierten Zustand befindet und der fünfte Transistor Q5 konfiguriert ist, um als ein Leistungsschalter zu dienen, und sich in einem aktivierten Zustand befindet.

6. Schaltung (100) nach Anspruch 4, wobei der erste Anschluss des vierten Transistors Q4 mit einem Systemleistungszufuhranschluss verbunden ist; und
wenn die erste Batteriezelle (101) einer Last Leistung durch Verwenden des Systemleistungszufuhranschluss zuführt, sich der vierte Transistor Q4 in einem aktivierten Zustand befindet und eine Spannungsdifferenz zwischen der Anode der ersten Batteriezelle (101) und dem Systemleistungszufuhranschluss durch ein Einstellen einer Gate-Spannung des vierten Transistors Q4 konstant gehalten wird.

7. Schaltung (100) nach einem der Ansprüche 1 bis 4 oder Anspruch 6, wobei, wenn die erste Batteriezelle (101) und die zweite Batteriezelle (102) konfiguriert sind, um Leistung durch Verwenden des zweiten SC-Wandlers (1223) und der ersten Schaltumwandlungsschaltung (1220) zuzuführen, der zweite SC-Wandler (1223) konfiguriert sind, um in dem Abwärtsmodus in der Richtung von dem zweiten Anschluss zu dem ersten Anschluss des zweiten SC-Wandlers (1223) zu arbeiten, die erste Schaltumwandlungsschaltung (1220) konfiguriert ist, um in dem Boost-Modus in einer Richtung von dem zweiten Anschluss zu dem ersten Anschluss der ersten Schaltumwandlungsschaltung (1220) zu arbeiten, und der fünfte Transistor Q5 konfiguriert ist, um als ein Leistungsschalter zu dienen, und sich in einem aktivierten Zustand befindet.

8. Schaltung (100) nach einem der Ansprüche 1 bis 4 oder Anspruch 6 oder 7, die ferner einen ersten Transistor Q1 umfasst, wobei ein erster Anschluss des ersten Transistors Q1 mit dem Spannungseingangsanschluss verbunden ist und ein zweiter Anschluss des ersten Transistors Q1 mit einem ersten Anschluss des zweiten Transistors Q2 und einem ersten Anschluss des dritten Transistors Q3 verbunden ist.

9. Elektronische Vorrichtung (200), die umfasst:
eine erste Batteriezelle (101) und eine zweite Batteriezelle (102), die in Reihe geschaltet sind; und
die Schaltung nach einem der Ansprüche 1 bis 4 oder einem der Ansprüche 6 bis 8,
wobei die Schaltung konfiguriert ist, um die erste Batteriezelle (101) und die zweite Batteriezelle (102) zu steuern.

## Revendications

1. Circuit de commande d'élément de batterie (100), dans lequel l'élément de batterie comprend un premier élément de batterie (101) et un second élément de batterie (102) qui sont connectés en série, une cathode du premier élément de batterie (101) est mise à la terre, et le circuit comprend :
un premier chemin de charge (110), comprenant un premier convertisseur à condensateur commuté, SC, (1221), un deuxième transistor Q2, et un cinquième transistor Q5, dans lequel le deuxième transistor Q2 est disposé entre un port d'entrée de tension et le premier convertisseur SC (1221), une première borne du premier convertisseur SC (1221) est connectée au deuxième transistor Q2, une seconde borne du premier convertisseur SC (1221) est connectée à une première borne du cinquième transistor Q5, une seconde borne du cinquième transistor Q5 est configurée pour se connecter à une anode du second élément de batterie (102), et le port d'entrée de tension est configuré pour recevoir une tension d'entrée ;
un second chemin de charge (120), comprenant un premier circuit de conversion de commutation (1220), un second convertisseur SC (1223), un troisième transistor Q3, et le cinquième transistor Q5, dans lequel le troisième transistor Q3 est disposé entre le port d'entrée de tension et le premier circuit de conversion de commutation (1220), une première borne du premier circuit de conversion de commutation (1220) est connectée au troisième transistor Q3, une seconde borne du premier circuit de conversion de commutation (1220) est connectée à une première borne du second convertisseur SC (1223), une seconde borne du second convertisseur SC (1223) est connectée à la seconde borne du premier convertisseur SC (1221), et le premier circuit de conversion à commutation (1220) est configuré pour prendre en charge le fonctionnement dans un mode abaisseur dans une direction allant de la première borne à la seconde borne du premier circuit conversion de commutation (1220), **caractérisé en ce que** le cinquième transistor Q5 sert de commutateur d'alimentation et est dans un état activé lorsque le premier chemin de charge fonctionne ; et
le cinquième transistor Q5 est configuré pour stabiliser un courant de charge lorsque le second trajet de charge fonctionne, dans lequel une stabilisation de courant signifie qu'une valeur du courant de charge est commandée pour rester inchangée à une valeur constante.

2. Circuit selon la revendication 1, dans lequel, lorsque le premier chemin de charge fonctionne, le deuxième transistor Q2 est configuré pour servir de commutateur et est allumé, et le troisième transistor Q3 est configuré pour servir de commutateur et est éteint ; et lorsque le second chemin de charge (120) fonctionne, le deuxième transistor Q2 est configuré pour servir de commutateur et est éteint, et le troisième transistor Q3 est configuré pour servir de commutateur et est allumé.

3. Circuit (100) selon la revendication 1 ou 2, dans lequel le second convertisseur SC (1223) est configuré pour prendre en charge un mode d'amplification dans une direction allant de la première borne à la seconde borne du second convertisseur SC (1223) et le mode abaisseur dans une direction allant de la seconde borne à la première borne du second convertisseur SC (1223).

4. Circuit (100) selon l'une quelconque des revendications 1 à 3, dans lequel le circuit comprend en outre un quatrième transistor Q4, une première borne du quatrième transistor Q4 est connectée à la seconde borne du premier circuit de conversion de commutation (1220) et à la première borne du second convertisseur SC (1223), et une seconde borne du quatrième transistor Q4 est connectée à une anode du premier élément de batterie (101).

5. Circuit selon la revendication 3, dans lequel, lorsque l'égalisation de tension est réalisée entre le premier élément de batterie (101) et le second élément de batterie (102) en utilisant le second convertisseur SC (1223), le quatrième transistor Q4 est configuré pour servir de commutateur d'alimentation et est dans un état activé, et le cinquième transistor Q5 est configuré pour servir de commutateur d'alimentation et est dans un état activé.

6. Circuit (100) selon la revendication 4, dans lequel la première borne du quatrième transistor Q4 est connectée à une borne d'alimentation électrique de système ; et lorsque le premier élément de batterie (101) fournit de l'énergie électrique à une charge en utilisant la borne d'alimentation électrique de système, le quatrième transistor Q4 est dans un état activé, et une différence de tension entre l'anode du premier élément de batterie (101) et la borne d'alimentation électrique de système est rendue constante en ajustant une tension de grille du quatrième transistor Q4.

7. Circuit (100) selon l'une quelconque des revendications 1 à 4 ou la revendication 6, dans lequel, lorsque le premier élément de batterie (101) et le second élément de batterie (102) sont configurés pour fournir de l'énergie électrique en utilisant le second convertisseur SC (1223) et le premier circuit de conversion de commutation (1220), le second convertisseur SC (1223) sont configurés pour fonctionner dans le mode abaisseur dans la direction allant de la seconde borne à la première borne du second convertisseur SC (1223), le premier circuit de conversion de commutation (1220) est configuré pour fonctionner dans le mode d'amplification dans une direction allant de la seconde borne à la première borne du premier circuit de conversion de commutation (1220), et le cinquième transistor Q5 est configuré pour servir de commutateur d'alimentation et est dans un état activé.

8. Circuit (100) selon l'une quelconque des revendications 1 à 4 ou la revendication 6 ou 7, comprenant en outre un premier transistor Q1, dans lequel une première borne du premier transistor Q1 est connectée au port d'entrée de tension, et une seconde borne du premier transistor Q1 est connectée à une première borne du deuxième transistor Q2 et à une première borne du troisième transistor Q3.

9. Dispositif électronique (200), comprenant :
un premier élément de batterie (101) et un second élément de batterie (102) qui sont connectés en série ; et
le circuit selon l'une quelconque des revendications 1 à 4 ou l'une quelconque des revendications 6 à 8, dans lequel le circuit est configuré pour commander le premier élément de batterie (101) et le second élément de batterie (102).
